# EUROPEAN PATENT APPLICATION

(11) **EP 2 881 876 A1**
(43) Date of publication of application: **10.06.2015**
(21) Application number: 13196106.2
(22) Date of filing: 06.12.2013
(51) Int. Cl.: G06F 19/12, G06Q 50/02

(54) **Method for decision support in pest, disease and/or weed control management**

(71) Applicant: Bayer CropScience AG, 40789 Monheim am Rhein (DE)
(72) Inventor: Cerdà Vallès, Santiago, 43112 Massarrojos (Valencia) (ES)
(74) Representative: Albiger, Jonas

(57) **Abstract**

A method for decision support in pest, disease and/or weed control management is proposed, wherein a forecast regarding the time of an appearance of a pest species, pathogen and/or a weed variety at a forecast location is made in a forecast year on a forecast day (t1) based on the temperature data of the year preceding the forecast year and of the forecast year, wherein the date of a day of the preceding year on which the pest species, pathogen and/or weed variety appeared for the first time at the forecast location is inputted into an evaluation device and stored in a storage device, wherein the temperature data of the preceding year and of the forecast year are transmitted by a temperature measuring device to the evaluation device and stored in the storage device, wherein the evaluation device calculates an accumulated degree day number (Y1) for the forecast day (t1) from the temperature data of the forecast year, wherein the evaluation device determines accumulated degree day numbers of the preceding year from the temperature data of the preceding year and compares the accumulated degree day number (Y1) of the forecast year with the accumulated degree day numbers of the preceding year, wherein the evaluation device, based on this comparison, makes a forecast regarding the time of an appearance of the pest species, pathogen and/or weed variety and a day number difference is displayed on a display device, wherein the day number difference indicates by how many days a forecast date of the appearance of the pest species, pathogen and/or weed variety in the forecast year differs from the date of the day of the preceding year on which the pest species, pathogen and/or weed variety appeared at the forecast location for the first time.

## Description

### Prior Art

The invention relates to a method for decision support in pest, disease and/or weed control management. In pest, disease and/or weed control, it is important that pest, disease and/or weed control agents are deployed on the fields at the right time. If the pest, disease and/or weed control agent is deployed on the field too early, the agent could be washed away by rain without being able to achieve its desired effect. If, on the other hand, the pest, disease and/or weed control agent is dispersed on the fields too late, larvae of pests, for example, could have developed to an extent where the control agent is no longer able to serve its purpose. Also, if the weed control agent was deployed too late, a relatively large weed population could have formed which can no longer be sufficiently controlled by means of the deployed control agent.

It is therefore of great importance that pest, disease and/or weed control agents be deployed on the fields at the right time. The decision as to when the agent is deployed on the fields can depend on various factors. It is known from document US 2012/0123817 A1, for example, to make a management decision that relates to the application of pesticides and that involves the accumulated degree days that accrue or have accrued from the time of planting until the scheduled harvest. However, this forecasting method is relatively imprecise because it is unknown on how many degree days the pests will actually appear or develop.

Therefore, it is the object of the present invention to provide a method for decision support in pest, disease and/or weed control management that does not include the prior art drawbacks and that, in particular, enables a more exact and reliable forecast of the appearance of a pest species, pathogen and/or weed variety.

### Disclosure of the Invention

This object is achieved with the inventive method according to claim 1. The method enables a more exact and reliable forecast as to when the appearance of the pest species, pathogen and/or weed variety is to be expected in the forecast year. For the sake of simplicity, the term "pest variety" in the following means the pest species, pathogen and/or the weed variety.

This is achieved, inter alia, by the temperature data of the forecast year, i.e. of the current year in which the forecast is made, and of the year preceding the forecast year being used for decision making or decision support. The temperature data of the forecast year and the preceding year provide a good informational basis as to how the pest variety could develop in the forecast year. For example, if the forecast year has been colder than the preceding year, it must be assumed that the pest variety will appear at a later time or date than in the preceding year. Correspondingly, if the forecast year has been warmer than the preceding year, it must be assumed that the pest variety will appear at an earlier time or date than in the preceding year.

For example, the calculation of the degree days respectively the accumulated degree days can start on January 01 of the forecast year or of the preceding year. However, the calculation of the degree days respectively the accumulated degree days can also start at a different date of the forecast year or of the preceding year.

In a preferred embodiment the calculation of the accumulated degree days in the forecast year starts on the same date as the calculation of the accumulated degree days in the preceding year. For example, the calculations in the preceding year and in the forecast year both start on January 01.

According to a preferred embodiment, it is provided that not only the historical temperature data are used for the forecast, but that also the current temperature data of the forecast day are being used. The forecast day is the day the forecast is made. In this preferred embodiment, the temperature data are measured so as to be current for each day, retrieved, transmitted to the evaluation unit, processed there and included into the forecast. For example, temperature data can be included into the forecast up to a time immediately prior to the request for the forecast. This results in a comparatively exact forecast as to how the pest variety will develop in the forecast year.

If a farmer wishes to obtain a forecast on the appearance of a pest variety, such as aphids, disease and/or a weed variety, he is able to request a forecast via an input device, which may comprise a mechanical push button and/or a software button, for example. Through the input device, which may, for example, comprise a keyboard, the farmer can input, for example, the date of the day of the preceding year on which the pest variety has appeared for the first time at the forecast location. The forecast location is the location for which the forecast is to be made. For example, the forecast location is the grain field that is to be protected against the pest, disease and/or weed infestation.

This day respectively the date of the preceding year, on which the pest variety has appeared for the first time at the forecast location, is forwarded to the evaluation device by the input device and stored in the storage device. For example, the evaluation device comprises a data processing device, such as a computer and/or a microcontroller device.

For example, the farmer may request a forecast on the future appearance of aphids at noon on May 01 of the forecast year. In this case, May 01 would be the forecast day within the sense of the application. For example, this request may be made by actuating the input device, e.g. by pressing or actuating a mechanical push button and/or by touching a software button. This request may be made, for example, by means of a software button in a mobile application, a so-called app, on a smartphone. The temperature data of the preceding year and of the forecast year are transmitted by the temperature measuring device to the evaluation device and stored in the storage device. For example, the temperature measuring device may be an official or state-owned weather station. The temperature measuring device transmits the temperature data e.g. via a wireless connection, to the evaluation device, which can be equipped with a wireless data-receiving interface for this purpose.

For example, the temperature measuring device may also be a satellite device capable of determining the temperature at the forecast location through heat radiation, for instance. Furthermore, it is also possible that the temperature measuring device is a local measuring station installed at the forecast location itself, i.e. at the grain field that is to be protected. Temperature data from several sources may also be used for an improved forecast. In particular, it is provided by way of example that the temperature data of the two weather stations closest to the forecast location and of one satellite device are used and that the temperature data for the further calculation or forecast are obtained from these three data sets, e.g. by averaging.

According to an exemplary embodiment, the method is carried out with a software application on a mobile device, such as a smartphone. First, the location is determined at which the mobile device is situated, e.g. via GPS. Then, the temperature data for the preceding year and the forecast year are requested by the temperature measuring device for this determined location, the temperature data are transmitted by the temperature measuring device to the evaluation device and stored in the storage device. Then, the forecast is made on the appearance of the pest variety, with the temperature data for this determined location being used. Thus, a comparatively exact forecast can be made for the determined location. Moreover, a forecast is possible at any location so long as the location can be determined and the temperature data for this location are available.

This exemplary method can be improved even further by temperature data being requested for the determined location by several temperature measuring devices and being used for the forecast. The received temperature data can also be weighted, e.g. according to how great the distance of the temperature measuring devices from the determined location is. A further improved forecast is thus possible.

The temperature data transmitted to the evaluation device may be, for example, the minimum daily temperatures, the maximum daily temperatures and/or the average daily temperatures. However, the temperature data may also be temperature curves in which the temperature behavior is plotted against time. The evaluation device calculates the accumulated degree day number for the forecast day from the temperature data of the forecast year. The accumulated degree day number can be calculated in the conventional manner. An exemplary calculation method for the degree days is, for example, forming the sum of the maximum daily temperature and the minimum daily temperature and dividing this sum by 2. Another method could be to use the average daily temperature minus 10 K. However, the average daily temperature, for example, could also be used on its own. Other calculation methods are known to the person skilled in the art from the prior art.

The evaluation device calculates the accumulated degree day numbers of the preceding year, with the same calculation method being used for the degree day numbers, and compares the calculated accumulated degree day number of the forecast day with the accumulated degree day numbers of the preceding year. Then, the day number difference is determined from this comparison.

In order to determine the day number difference, the evaluation device according to an exemplary embodiment determines the reference day or reference date of the preceding year on which, for the first time, calculated for example from the beginning of the preceding year, the accumulated degree day number is equal to or greater than the accumulated degree day number of the forecast day. The evaluation device compares this reference day or this reference date with the date of the forecast day, and from this comparison calculates the day number difference between the reference day of the preceding year and the forecast day. Possibly, leap years have to be taken into account in this calculation. The day number difference is now displayed to the farmer on the display device, e.g. in the form of a number.

According to another exemplary embodiment, the evaluation device determines the day number difference in such a way that, for example, the slope of the degree day number curve in the past 3, 5, 10, 15 or 20 days, starting from the forecast day, is calculated. Then, the number of days is calculated which, because of this slope, have yet to pass in order for the degree day number of the preceding year to be reached that was reached on the appearance of the pest variety.

Moreover, the display device can also display a plus sign (+) or a minus sign (-), so that the direction of the deviation or of the difference is also apparent to the farmer. For example, the display device could indicate with a plus sign if the appearance of the pest variety is delayed, or indicate with a minus sign if the pest variety is going to appear earlier than in the preceding year. If, for example, the aphid infestation began in the preceding year on May 11, and if this date has been inputted into the evaluation device, the farmer could request a forecast on May 1. If, for example, the day number difference of 11 days, or plus 11 days, is displayed on the display device, this means that the forecast beginning of the aphid infestation is 11 days later than in the preceding year, so that the beginning of the aphid infestation is to be expected for May 22. Now, the farmer is able to make his decisions and, for example, use control agents promptly prior to May 22.

Moreover, it may also be provided by way of example that a calendar or a section of the calendar of the forecast year, in which the forecast beginning is represented graphically, is displayed on the display device. Advantageously, this enables a particularly user-friendly representation of the forecast result. Furthermore, the period of the forecast appearance can be displayed in the calendar if the evaluation device knows last year's duration of appearance, e.g. three or four days.

Moreover, the farmer can input yet more data of the preceding year into the database of the evaluation device in order to further improve the method. For example, this can be the date of egg laying in the preceding year, of the first observed flight, of the hatching out of the eggs, etc. A further forecast with regard to time can be made also for these data. For this purpose, the method runs in principle as described above, the indicated day number difference in that case not relating to the beginning of the appearance, of course, but to the corresponding event.

Exemplary embodiments of the present invention are shown in the drawings and explained in more detail in the description below.

### Brief description of drawings

The figures schematically show:
- Figure 1: a block diagram about the flow of a method according to an exemplary embodiment of the present invention, and
- Figure 2: two curve patterns that can be used, by way of example, for the method according to the invention.

### Embodiments of the invention

In the various figures, the same parts are always provided with the same reference numerals and are therefore also only identified or mentioned once in each case, as a rule.

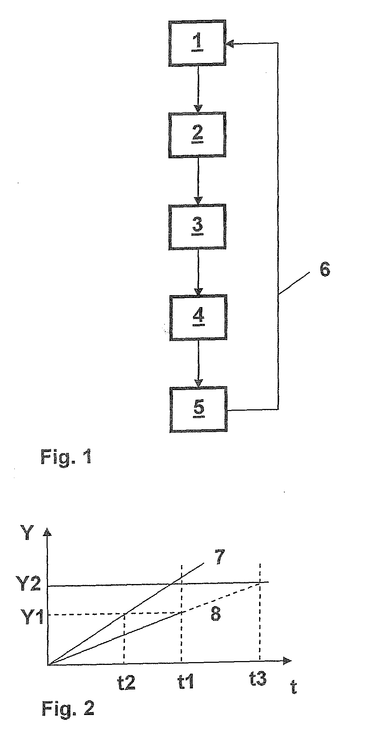

Figure 1 schematically shows a block diagram about the flow of a method according to an exemplary embodiment of the present invention. The method serves for the decision support for a farmer in pest control management, with a forecast regarding the time of an appearance of a pest variety at a forecast location being made in a forecast year on a forecast day based on the temperature data of the year preceding the forecast year.

All pest varieties, diseases and/or weed varieties can be dealt with using this method. In this example, the forecast location is the grain field of the farmer which is to be protected, for example, against aphid infestation. For example, the farmer wants to know the best point in time to deploy a pest control agent against aphids on his fields. In this example, the forecast day is May 1 of the forecast year. The forecast year is the year 2014, for instance. It is 12 o'clock noon and the farmer wishes to obtain as exact a forecast as possible on the future appearance of aphids.

Block 1 symbolizes a first method step, in which the farmer inputs into an evaluation device a date of a day of the preceding year, i.e. in this example the year 2013, on which the aphids appeared for the first time at the forecast location in the preceding year. For example, the input may take place via a keyboard. In this example, it is presumed that the farmer inputs May 11, 2013 as the beginning of the aphid infestation in the preceding year. After this input, the farmer requests the forecast on the future appearance of the aphids in a second method step symbolized by Block 2. This request may be made, for example, by touching a software button in a mobile application on a smartphone.

Following this request, temperature data are transmitted by a temperature measuring device to the evaluation device in a method step symbolized by Block 3. These temperature data can be transmitted wirelessly, for instance. For example, the temperature data can originate from official or state-owned weather stations. However, the temperature data may also come from a satellite device. Moreover, it is possible that the temperature data stem from a local weather station installed at the forecast location. The temperature data are stored in a storage device. The temperature data are the temperature data of the preceding year of the forecast year and of the part of the forecast year that has passed so far. The obtained temperature data are evaluated by the evaluation device in a subsequent method step symbolized by Block 4. For this purpose, an accumulated degree day number is calculated for the forecast day. The temperature data from January 1 of the forecast year until the forecast day are used for this purpose.

In this example, it is presumed that the accumulated degree day number on the forecast day was 1500°C or K. The evaluation device now calculates the accumulated degree day number curve or the accumulated degree day numbers of the preceding year. The evaluation device determines the day of the preceding year on which, calculated from January 1, the accumulated degree day number reaches or exceeds the value 1500°C. In this example, it is presumed that in the preceding year the accumulated degree day number of 1500°C was already reached on April 20, 2013. It follows therefrom that the forecast year so far was slightly colder than the preceding year. Between April 20 and May 01, there are 11 days, so that the appearance of the aphids in the forecast year is to be expected 11 days after May 11, i.e. on May 22, 2014. In this case, the display device, in a method step symbolized by Block 5, displays for example the value +11, which indicates to the farmer that the appearance of the aphids is delayed by 11 days compared to the preceding year. In addition, the display device may display a calendar into which the date forecast for the aphid infestation is entered. The farmer is now able to base his decision regarding the use of the control agent on this forecast and take the corresponding measures in due time. Arrow 6, which is directed from Block 5 back to Block 1, symbolizes that the method can be started again. For example, another forecast can be requested on the following day, and the method starts again in Block 1 and proceeds, mutatis mutandis, as described above.

Figure 2 schematically shows two curve patterns that can be used, by way of example, for the method according to the invention. The accumulated degree day number in °C or K is plotted on the vertically extending axis labeled Y. The time is plotted on the horizontally extending axis labeled t. The time axis t begins at the origin on January 1. Curve 7, which is depicted as a straight line for the sake of a clearer illustration, characterizes the pattern in the preceding year, i.e. in the year 2013 in this example. Curve 8, which is also depicted as a straight line, characterizes the pattern in the forecast year, i.e. in the year 2014 in this example.

The slope of curve 8 is lower than the slope of curve 7, meaning that the year 2014 was colder than the year 2013. Accordingly, the accumulated degree day number on the forecast day t1 (curve 8) is lower than on the same date in the preceding year 2013 (curve 7). The degree day number Y1 of curve 8 on the forecast day t1 was reached earlier by the curve 7 from 2013, namely on a reference day t2. One exemplary calculating option is to determine the difference t1-t2 between the reference day t2 and the forecast day t1, which indicates the delay in days in the forecast year 2014. For the prognosis, this delay is now added to the date of the preceding year on which the aphid infestation appeared. This yields the new prognosis date for the forecast year.

Another exemplary calculation method involves the determination of the slope of the degree day curve 8, for example over 3, 5, or 10 days prior to the forecast day t1. Moreover, the difference is determined between the degree day number Y1 and a degree day number Y2 of the day of the preceding year on which the pest variety appeared for the first time in the preceding year. The slope of the curve 8 and the degree day number difference Y2-Y1 then yields the number of days t3-t1 that is expected to pass until the pest variety appears. Then, the day number difference is determined from this. These examples merely serve for illustrating the invention and are not supposed to limit the subject matter of the invention in any way.

## Claims

1. A method for decision support in pest, disease and/or weed control management, wherein a forecast regarding the time of an appearance of a pest species, pathogen and/or a weed variety at a forecast location is made in a forecast year on a forecast day (t1) based on the temperature data of the year preceding the forecast year and of the forecast year,
wherein the date of a day of the preceding year on which the pest species, pathogen and/or weed variety appeared for the first time at the forecast location is inputted into an evaluation device and stored in a storage device,
wherein the temperature data of the preceding year and of the forecast year are transmitted by a temperature measuring device to the evaluation device and stored in the storage device, wherein the evaluation device calculates an accumulated degree day number (Y1) for the forecast day (t1) from the temperature data of the forecast year,
wherein the evaluation device determines accumulated degree day numbers of the preceding year from the temperature data of the preceding year and compares the accumulated degree day number (Y1) of the forecast year with the accumulated degree day numbers of the preceding year,
wherein the evaluation device, based on this comparison, makes a forecast regarding the time of an appearance of the pest species, pathogen and/or weed variety and a day number difference is displayed on a display device, wherein the day number difference indicates by how many days a forecast date of the appearance of the pest species, pathogen and/or weed variety in the forecast year differs from the date of the day of the preceding year on which the pest species, pathogen and/or weed variety appeared at the forecast location for the first time.

2. The method according to claim 1, **characterized in that** the evaluation device determines a reference day (t2) of the preceding year on which the accumulated degree day number is equal to, or for the first time greater than, the accumulated degree day number of the forecast year (Y1),
wherein the evaluation device calculates the day number difference between the reference day (t2) of the preceding year and the forecast day (t1) and the day number difference is displayed on the display device.

3. The method according to any one of the preceding claims, **characterized in that** the temperature data include minimum daily temperatures, maximum daily temperatures and/or average daily temperatures.

4. The method according to any one of the preceding claims, **characterized in that** it is indicated on the display device with a plus sign if the appearance of the pest species, pathogen and/or the weed variety is delayed, or indicated with a minus sign if the pest species, pathogen and/or weed variety is going to appear earlier than in the preceding year.

5. The method according to any one of the preceding claims, **characterized in that** a forecast is requested by touching a software button in a mobile application on a smartphone, whereupon the temperature data of the preceding year, of the forecast year and of the forecast day (t1) are transmitted by the temperature measuring device to the evaluation device and stored in the storage device.

6. The method according to any one of the preceding claims, **characterized in that** the temperature measuring device is an official, state-owned weather station.

7. The method according to any one of the preceding claims, **characterized in that** the temperature data are transmitted wirelessly from the temperature measuring device to the evaluation device.

8. The method according to any one of the preceding claims, **characterized in that** the temperature measuring device is a satellite device that determines the temperature data at the forecast location through heat radiation.

9. The method according to any one of the preceding claims, **characterized in that** the temperature measuring device is a local measuring station installed at the forecast location.

10. The method according to any one of the preceding claims, **characterized in that** the evaluation device calculates the accumulated degree day number for the forecast year (Y1) from the temperature data of the period from January 1 to the forecast day (t1).

11. The method according to any one of the preceding claims, **characterized in that** a calendar, on which a forecast date is graphically represented, is displayed on the display device.

12. The method according to any one of the preceding claims, **characterized in that**, in addition, the dates of egg laying, of the first observed flight and/or of the hatching out of the eggs from the preceding year are input into the evaluation device, and that another forecast as regards time is made for the data.
